# EUROPÄISCHE PATENTSCHRIFT

(11) **EP 3 166 171 B1**
(45) Veröffentlichungstag und Bekanntmachung des Hinweises auf die Patenterteilung: **26.02.2020**
(21) Anmeldenummer: 15193211.8
(22) Anmeldetag: 05.11.2015
(51) Int. Cl.: H01M 10/26, H01M 10/30, H01M 10/32, H01M 10/34, H01M 6/04, H01M 12/06, H01G 11/62, H01G 11/64, H01G 11/24, H01G 11/38

(54) **ELEKTROCHEMISCHE ZELLE**
ELECTROCHEMICAL CELL
CELLULE ELECTROCHIMIQUE

(43) Veröffentlichungstag der Anmeldung: 10.05.2017
(73) Patentinhaber: VARTA Microbattery GmbH, 73479 Ellwangen Jagst (DE)
(72) Erfinder: Chumak, Ihor, 73479 Ellwangen (DE); Ensling, David, 73479 Ellwangen (DE); Löffelmann, Hermann, 73479 Ellwangen (DE); Scholz, Stefanie, 73479 Ellwangen (DE); Schula, Claudio, 73479 Ellwangen (DE)
(74) Vertreter: Patentanwaltskanzlei Cartagena

(56) Entgegenhaltungen:
- EP-A1- 0 981 172
- EP-A1- 3 312 927
- EP-A2- 1 577 968
- WO-A1-2016/005529
- WO-A1-2016/061276
- WO-A2-2016/020136

## Beschreibung

Die vorliegende Erfindung betrifft elektrochemische Zellen mit einer positiven Elektrode, einer negativen Elektrode, einem Separator, der zwischen den Elektroden angeordnet ist, einem wässrigen Elektrolyten, mit dem die Elektroden getränkt sind und einem flüssigkeitsdicht verschlossenen Gehäuse, in dem die Elektroden, der Separator und der Elektrolyt angeordnet sind.

In solchen Zellen findet eine elektrochemische, energieliefernde Reaktion statt, welche sich aus zwei elektrisch miteinander gekoppelten aber räumlich voneinander getrennten Teilreaktionen zusammensetzt. Eine bei vergleichsweise niedrigerem Redoxpotential stattfindende Teilreaktion läuft an der negativen Elektrode ab, eine bei vergleichsweise höherem Redoxpotential an der positiven Elektrode. Bei der Entladung werden an der negativen Elektrode durch einen Oxidationsprozess Elektronen freigesetzt, resultierend in einem Elektronenstrom übereinen äußeren Verbraucher zur positiven Elektrode, von der eine entsprechende Menge an Elektronen aufgenommen wird. An der positiven Elektrode findet also ein Reduktionsprozess statt. Zeitgleich kommt es zu einem der Elektrodenreaktion entsprechenden lonenstrom innerhalb der Zelle. Dieser lonenstrom wird durch einen Ionen leitenden Elektrolyten gewährleistet. In sekundären (wieder aufladbaren) Zellen ist diese Entladereaktion reversibel, es besteht also die Möglichkeit, die bei der Entladung erfolgte Umwandlung chemischer Energie in elektrische umzukehren.

Dem Elektrolyten kommt bei dem beschriebenen Prozess eine entscheidende Bedeutung zu. Ohne Elektrolyten kann ein Ladungsausgleich innerhalb der Zelle durch den genannten Ionenstrom nicht erfolgen.

In vielen elektrochemischen Zellen kommen wässrige Elektrolyten zum Einsatz. Bekannte Beispiele für solche Zellen sind primäre Systeme wie die die Zink/Luft-Zelle, die Silberoxid/Zink-Zelle, die Zink/Braunstein-Zelle (auch bekannt als Alkali-Mangan-Zelle) und die Quecksilberoxid/Zink-Zelle sowie sekundäre Systeme wie der Nickel/Eisen-Akkumulator (Edison-Akkumulator), der Nickel/Metallhydrid-Akkumulator, der Nickel/Zink-Akkumulator und der Nickel/Cadmium-Akkumulator. Diese weisen als Elektrolyten alle eine wässrige alkalische Lösung, meist Natronlauge oder Kalilauge, auf.

Jüngere Entwicklungen der Anmelderin betreffen unter anderem Nickel-Eisen-Akkumulatoren und Nickel-Metallhydrid-Akkumulatoren, deren negative Elektroden mit einem kohlenstoffbasierten Speichermaterial modifiziert sind, so dass sie pseudokapazitive Eigenschaften aufweisen, sowie asymmetrische Systeme mit negativen Elektroden auf Kohlenstoffbasis und positive Elektroden auf Basis von Nickelhydroxid und/oder Nickeloxyhydroxid. Diese Akkumulatoren zeichnen sich insbesondere dadurch aus, dass sie sich sehr schnell Laden lassen und dabei eine hohe Überladestabilität aufweisen. Auch hier kommen wässrige, alkalische Elektrolyte zum Einsatz.

Da Wasser eine relativ niedrige Zersetzungsspannung aufweist, muss beim Betrieb von elektrochemischen Zellen mit wässrigem Elektrolyten verstärkt darauf geachtet werden, dass es nicht zu einer unerwünschten Gasentwicklung in Folge einer Elektrolytzersetzung kommt. Entsprechende Vorsichtsmaßnahmen müssen insbesondere bei Ladevorgängen getroffen werden. Eine Zersetzung des Elektrolyten kann den Ausfall einer Zelle zur Folge haben, gegebenenfalls auch ihre explosionsartige Zerstörung.

Bei der Entwicklung elektrochemischer Zellen mit wässrigem Elektrolyten wird daher verstärkt darauf geachtet, dass der verwendete Elektrolyt eine hohe elektrochemische Stabilität aufweist und in einem möglichst breiten Spannungsfenster betrieben werden kann.

Aus der nachveröffentlichten WO 2016/005529 A1 sowie der gleichfalls nachveröffentlichten WO 2016/020136 A2 sind elektrochemische Zellen bekannt, deren Elektrolyt ein Nonylphenolethoxylat umfasst. Bei den Zellen handelt es sich um Nickel-Eisen-Akkumulatoren und Nickel-Metallhydrid-Akkumulatoren, deren negative Elektrode mit einem kohlenstoffbasierten Speichermaterial modifiziert ist, so dass sie pseudokapazitive Eigenschaften aufweist. Weiterhin sind elektrochemische Zellen umfassend ein asymmetrisches System mit einer negativen Elektrode auf Kohlenstoffbasis und einer positiven Elektrode auf Basis von Nickelhydroxid und/oder Nickeloxyhydroxid beschrieben.

Aus der EP 1 577 968 A2 und der EP 0 981 172 A1 sind Separatoren für elektrochemische Zellen mit wässrigem Elektrolyten bekannt. Diese Separatoren weisen eine Beschichtung auf, welche Nonylphenoxypoly(ethylenoxy)ethanol umfasst.

Aus der nachveröffentlichten WO 2016/061276 A1 sind Zellen mit wässrigem Elektrolyten, dem ein nichtionisches Tensid zugesetzt ist, bekannt. Bei dem Tensid handelt es sich um Octylphenoxypolyethoxyethanol.

Aus der nachveröffentlichten EP 3 312 927 A1 sind gleichfalls Zellen mit wässrigem Elektrolyten, dem ein nichtionisches Tensid zugesetzt ist, bekannt. Bei dem Tensid handelt es sich um ein p-tert-Octylphenol-Derivat.

Gemäß der vorliegenden Erfindung wird eine elektrochemische Zelle bereitgestellt, bei der ein Elektrolyt zum Einsatz kommt, dessen Eigenschaften durch Zusatz eines Additivs auf Basis eines Arylethoxylats verbessert sind.

Die pruchte Zelle weist wie gattungsgemäße Zellen eine positive Elektrode, eine negative Elektrode, einen Separator, der zwischen den Elektroden angeordnet ist, einen wässrigen Elektrolyten, mit dem die Elektroden getränkt sind und ein flüssigkeitsdicht verschlossenes Gehäuse, in dem die Elektroden, der Separator und der Elektrolyt angeordnet sind auf. Anders als gattungsgemäße Zellen enthält er allerdings ein Arylethoxylat der allgemeinen Formel 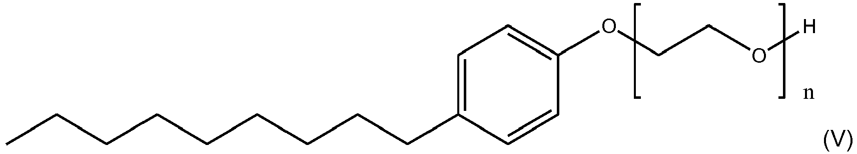 mit n = 10 bis bis 15. In einigen besonders bevorzugten Ausführungsformen ist n hier 10, 11 oder 12.

Allgemein ist es bevorzugt, dass das eingesetzte Arylethoxylat eine Molmasse im Bereich von 440 g/mol bis 900 g/mol aufweist.

Bevorzugt zeichnet sich der Elektrolyt dadurch aus, dass er das Arylethoxylat in einem Anteil von 0,0001 Gew.-% bis 2 Gew.-%, bevorzugt in einem Anteil von 0,0001 Gew.-% bis 2 Gew.-%, besonders bevorzugt in einem Anteil von 0,001 Gew.-% bis 1 Gew.-%, enthält.

Weiterhin ist es bevorzugt, dass der Elektrolyt mindestens eine Hydroxidverbindung enthält, bevorzugt in einer Konzentration von 0,1 M bis 10 M. Besonders bevorzugt enthält der Elektrolyt als Hydroxidverbindung mindestens ein Metallhydroxid, insbesondere Natrium-, Lithium- oder Kaliumhydroxid.

Zusätzlich zu dem Arylethoxylat kann der Elektrolyt eine oder mehrere der folgenden Komponenten enthalten:
- Mindestens eine Verbindung aus der Gruppe mit Alkaliwolframat, Alkalimetaborat und Alkaliborhydrid, insbesondere Natrium- (Na₂WO₄) oder Kaliumwolframat (K₂WO₄) oder Natriummetaborat (NaBO₂) oder ein Natriumborhydrid (NaBH₄), bevorzugt in einer Konzentration im Bereich von 0,001 Gew.-% bis 0,1 Gew.-%, und
- mindestens ein Additiv aus der Gruppe mit Verdickern, Korrosionsinhibitoren, Netzmitteln und Frostschutzmitteln.

Bei der erfindungsgemäßen elektrochemischen Zelle handelt es sich bevorzugt um eine wiederaufladbare Zelle. Grundsätzlich kann der beschriebene Elektrolyt aber in allen eingangs genannten elektrochemischen Zellen zum Einsatz kommen, also auch in den genannten primären Zellen. Entsprechend ist die erfindungsgemäße Zelle bevorzugt eine Zink/Luft-Zelle, eine Silberoxid/Zink-Zelle, eine Zink/Braunstein-Zelle, eine Quecksilberoxid/Zink-Zelle oder ein Nickel/Eisen-Akkumulator ein Nickel/Metallhydrid-Akkumulator ein Nickel/Zink-Akkumulator oder ein Nickel/Cadmium-Akkumulator.

Von der Erfindung sind allerdings die folgenden Zellen nicht umfasst:
- Nickel-Eisen-Akkumulatoren, deren negative Elektroden mit einem kohlenstoffbasierten Speichermaterial modifiziert sind, so dass sie pseudokapazitive Eigenschaften aufweisen, und
- Nickel-Metallhydrid-Akkumulatoren, deren negative Elektrode mit einem kohlenstoffbasierten Speichermaterial modifiziert sind, so dass sie pseudokapazitive Eigenschaften aufweisen, und
- asymmetrische Systeme mit einer negativen Elektrode auf Kohlenstoffbasis und einer positiven Elektrode auf Basis von Nickelhydroxid und/oder Nickeloxyhydroxid.

In weiteren besonders bevorzugten Ausführungsformen ist die erfindungsgemäße elektrochemische Zelle eine Kondensatorzelle.

### Ausführungsbeispiel

### I. Beispiele erfindungsgemäßer elektrochemischer Zellen

### (1) Nickel-Metallhydrid-Akkumulator

Zur Bildung positiver Elektroden wurde eine wässrige Aktivmaterial-Paste auf einen offenporigen Nickelschaum aufgebracht. Der Feststoffanteil der Paste setzte sich aus den folgenden Komponenten zusammen:
- 90 Gew.-% Ni(OH)₂,
- 4 Gew.-% Kobalt-Pulver als Leitmittel
- 4 Gew.-% Ruß als weiteres Leitmittel
- 2 Gew.-% eines wasserlöslichen Zelluloseethers als Binder

Zur Bildung negativer Elektroden wurde eine wässrige Aktivmaterial-Paste auf einen offenporigen Nickelschaum aufgebracht. Der Feststoffanteil der Paste setzte sich aus den folgenden Komponenten zusammen:
- 5 Gew.-% Ruß als Leitmittel
- 92,5 Gew.-% einer A₂B₇-Legierung
- 2,5 Gew.-% eines wasserlöslichen Zelluloseethers als Binder

Die Elektroden wurden jeweils getrocknet und einem Walzvorgang unterworfen. Danach wiesen sie eine Dicke von ca. 250 µm auf. Anschließend wurden die Elektroden mit einem Separator aus Polypropylen (non-woven, Dicke 80 µm) zu einem Elektroden-Separator-Verbund mit der folgenden Schichtsequenz kombiniert:
Hilfselektrode / negative Elektrode / Separator / positive Elektrode

Der Verbund wurde mit einem wässrigen Elektrolyten getränkt (6M KOH-Lösung), welcher 0,1 Gew.-% eines Arylethoxylats der Formel (V) mit n = 10 enthielt, und in einem Knopfzellengehäuse aus vernickeltem Edelstahl verbaut.

### (2) Modifizierter Nickel-Metallhydrid-Akkumulator

Zur Bildung positiver Elektroden wurde eine wässrige Aktivmaterial-Paste auf einen offenporigen Nickelschaum aufgebracht. Der Feststoffanteil der Paste setzte sich aus den folgenden Komponenten zusammen:
- 90 Gew.-% Ni(OH)₂,
- 4 Gew.-% Kobalt-Pulver als Leitmittel
- 4 Gew.-% Ruß als weiteres Leitmittel
- 2 Gew.-% eines wasserlöslichen Zelluloseethers als Binder

Zur Bildung negativer Elektroden wurde eine wässrige Aktivmaterial-Paste auf einen offenporigen Nickelschaum aufgebracht. Der Feststoffanteil der Paste setzte sich aus den folgenden Komponenten zusammen:
- 7,5 Gew.-% Aktivkohle mit einer BET-Oberfläche > 900 m²/g
- 90 Gew.-% einer A₂B₇-Legierung
- 2,5 Gew.-% eines wasserlöslichen Zelluloseethers als Binder

Die Elektroden wurden jeweils getrocknet und einem Walzvorgang unterworfen. Danach wiesen sie eine Dicke von ca. 250 µm auf. Auf eine Seite der negativen Elektrode wurde anschließend als Hilfselektrode zum Abbau eines gegebenenfalls in dem Gehäuse entstehenden Sauerstoffdrucks eine Mischung aus Aktivkohle, Ruß und Polytetrafluorethylen (PTFE) in einer Dicke im Bereich von 50 µm bis 100 µm aufgewalzt. Die exakte Zusammensetzung lag bei 75 Gew.% Aktivkohle, ca. 7,5 Gew.% Leitruß und ca. 17,5 Gew.% PTFE.

Anschließend wurden die Elektroden mit einem Separator aus Polypropylen (non-woven, Dicke 80 µm) zu einem Elektroden-Separator-Verbund mit der folgenden Schichtsequenz kombiniert:
Hilfselektrode / negative Elektrode / Separator / positive Elektrode

Der Verbund wurde mit einem wässrigen Elektrolyten getränkt (6M KOH-Lösung), welcher 0,1 Gew.-% eines Arylethoxylats der Formel (V) mit n = 10 enthielt, und in einem Knopfzellengehäuse aus vernickeltem Edelstahl verbaut.

### (3) Modifizierter Nickel-Eisen-Akkumulator

Zur Bildung positiver Elektroden wurde eine wässrige Aktivmaterial-Paste auf einen offenporigen Nickelschaum aufgebracht. Der Feststoffanteil der Paste setzte sich aus den folgenden Komponenten zusammen:
- 80 Gew.-% Ni(OH)₂,
- 4 Gew.-% Kobalt-Pulver als Leitmittel
- 14 Gew.-% Nickel-Pulver als weiteres Leitmittel
- 2 Gew.-% eines wasserlöslichen Zelluloseethers als Binder

Zur Bildung negativer Elektroden wurde eine wässrige Aktivmaterial-Paste auf einen offenporigen Nickelschaum aufgebracht. Der Feststoffanteil der Paste setzte sich aus den folgenden Komponenten zusammen:
- 20 Gew.-% Aktivkohle mit einer BET-Oberfläche > 900 m²/g
- 74,5 Gew.-% Eisenpartikel (zumindest teilweise zu Fe(OH)₂ oxidiert) mit einer mittleren Teilchengröße im Bereich von 100 nm bis 200 nm sowie
- 5 Gew.-% SBR als Binder
- 0.5 Gew.-% eines weitere wasserlöslichen CMC-Binders/-Verdickers

Auf eine Seite der negativen Elektrode wurde anschließend als Hilfselektrode zum Abbau eines gegebenenfalls in dem Gehäuse entstehenden Sauerstoffdrucks eine Mischung aus Aktivkohle, Ruß und Polytetrafluorethylen (PTFE) in einer Dicke im Bereich von 50 µm bis 100 µm aufgewalzt. Die exakte Zusammensetzung lag bei 75 Gew.% Aktivkohle, ca. 7,5 Gew.% Leitruß und ca. 17,5 Gew.% PTFE.

Anschließend wurden die Elektroden mit einem Separator aus Polypropylen (non-woven, Dicke 80 µm) zu einem Elektroden-Separator-Verbund mit der folgenden Schichtsequenz kombiniert:
Hilfselektrode / negative Elektrode / Separator / positive Elektrode

Der Verbund wurde mit einem wässrigen Elektrolyten getränkt (6M KOH-Lösung), welcher 0,1 Gew.-% eines Arylethoxylats der Formel (V) mit n = 10 enthielt, und in einem Knopfzellengehäuse aus vernickeltem Edelstahl verbaut.

### (4) Asymmetrisches System mit einer negativen Elektrode auf Kohlenstoffbasis und einer positiven Elektrode auf Basis von Nickelhydroxid

Zur Bildung positiver Elektroden wurde eine wässrige Aktivmaterial-Paste auf einen offenporigen Nickelschaum aufgebracht. Der Feststoffanteil der Paste setzte sich aus den folgenden Komponenten zusammen:
- 50 Gew.-% Ni(OH)₂,
- 8 Gew.-% Ruß als Leitmittel
- 40 Gew.-% Graphit als weiteres Leitmittel
- 2 Gew.-% eines wasserlöslichen Zelluloseethers als Binder

Zur Bildung negativer Elektroden wurde eine wässrige Aktivmaterial-Paste auf einen offenporigen Nickelschaum aufgebracht. Der Feststoffanteil der Paste setzte sich aus den folgenden Komponenten zusammen:
- 97,5 Gew.-% Aktivkohle mit einer BET-Oberfläche > 900 m²/g
- 2,5 Gew.-% eines wasserlöslichen Zelluloseethers als Binder

Auf eine Seite der negativen Elektrode wurde anschließend als Hilfselektrode zum Abbau eines gegebenenfalls in dem Gehäuse entstehenden Sauerstoffdrucks eine Mischung aus Aktivkohle, Ruß und Polytetrafluorethylen (PTFE) in einer Dicke im Bereich von 50 µm bis 100 µm aufgewalzt. Die exakte Zusammensetzung lag bei 75 Gew.% Aktivkohle, ca. 7,5 Gew.% Leitruß und ca. 17,5 Gew.% PTFE.

Anschließend wurden die Elektroden mit einem Separator aus Polypropylen (non-woven, Dicke 80 µm) zu einem Elektroden-Separator-Verbund mit der folgenden Schichtsequenz kombiniert:
Hilfselektrode / negative Elektrode / Separator / positive Elektrode

Der Verbund wurde mit einem wässrigen Elektrolyten getränkt (6M KOH-Lösung), welcher 0,1 Gew.-% eines Arylethoxylats der Formel (V) mit n = 10 enthielt, und in einem Knopfzellengehäuse aus vernickeltem Edelstahl verbaut.

### (5) Zink-Luft-Zellen und Zink-Silberoxid-Zellen

Aus Zinkpulver, Ruß und Carboxymethylcellulose als Elektrodenbinder wurden negative Elektroden für Zink-Luft-Zellen und Zink-Silberoxid-Zellen hergestellt. Hierzu wurden die genannten Elektrodenbestandteile in den folgenden Verhältnissen miteinander gemischt:

| | |
|---|---|
| Zinkpulver | 93 Gew.-% |
| Ruß | 5 Gew.-% |
| Elektrodenbinder | 2 Gew.-% |

Die Mischung für die Zink-Silberoxid-Zelle wurden zu einer tablettenförmigen Elektrode verpresst und als negative Elektrode in einem handelsüblichen Knopfzellengehäuse verbaut. Kombiniert wurde die negative Elektrode dabei mit einer Silber(I)-oxid enthaltenden Elektrode.

Die Mischung für die Zink-Luft-Zelle wurde in trockener Form in einen Knopfzellendeckel eingerieselt. Dieser wurde anschließend mit einem Knopfzellenbecher zu einem handelsüblichen Knopfzellengehäuse kombiniert, der Ein- bzw. Austrittsöffnungen für Luftsauerstoff und Wasserstoff aufwies.

Vor dem Schließen der Knopfzellengehäuse wurden die hergestellten Elektroden jeweils mit 30%-iger Kaliumhydroxid-Lösung, welche 0,1 Gew.-% eines Arylethoxylats der Formel (V) mit n = 10 enthielt, getränkt.

### (6) Doppelschichtkondensator

Zur Bildung positiver Elektroden wurde eine wässrige Aktivmaterial-Paste auf einen offenporigen Nickelschaum aufgebracht. Der Feststoffanteil der Paste setzte sich aus den folgenden Komponenten zusammen:
- 97,5 Gew.-% Aktivkohle mit einer BET-Oberfläche > 900 m²/g
- 2,5 Gew.-% eines wasserlöslichen Zelluloseethers als Binder

Zur Bildung negativer Elektroden wurde eine wässrige Aktivmaterial-Paste auf einen offenporigen Nickelschaum aufgebracht. Der Feststoffanteil der Paste setzte sich aus den folgenden Komponenten zusammen:
- 97,5 Gew.-% Aktivkohle mit einer BET-Oberfläche > 900 m²/g
- 2,5 Gew.-% eines wasserlöslichen Zelluloseethers als Binder

Anschließend wurden die Elektroden mit einem Separator aus Polypropylen (non-woven, Dicke 80 µm) zu einem Elektroden-Separator-Verbund mit der folgenden Schichtsequenz kombiniert:
Hilfselektrode / negative Elektrode / Separator / positive Elektrode

Der Verbund wurde mit einem wässrigen Elektrolyten getränkt (6M KOH-Lösung), welcher 0,1 Gew.-% eines Arylethoxylats der Formel (V) mit n = 10 enthielt, und in einem Knopfzellengehäuse aus vernickeltem Edelstahl verbaut.

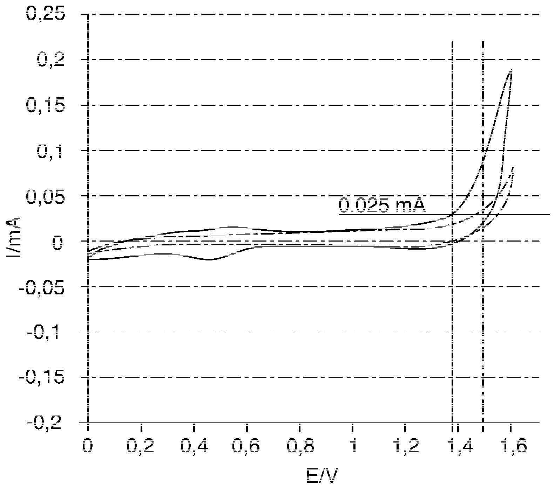

II. Die elektrochemische Stabilität des in Zellen gemäß (1) bis (6) verwendeten Elektrolyts wurde mittels Cyclovoltammetrie untersucht. Gegenüber einem Elektrolyten ohne den Zusatz des Arylethoxylats (durchgezogene Linie) zeigte der erfindungsgemäß verwendete Elektrolyt (gestrichelte Linie) eine verbesserte Stabilität (siehe Fig. 1).

## Patentansprüche

1. Elektrochemische Zelle mit
• einer positiven Elektrode,
• einer negativen Elektrode,
• einem Separator, der zwischen den Elektroden angeordnet ist,
• einem wässrigen Elektrolyten, mit dem die Elektroden getränkt sind und
• einem flüssigkeitsdicht verschlossenen Gehäuse, in dem die Elektroden, der Separator und der Elektrolyt angeordnet sind,
wobei die elektrochemische Zelle kein Nickel-Eisen-Akkumulator, dessen negative Elektrode mit einem kohlenstoffbasierten Speichermaterial modifiziert ist, so dass sie pseudokapazitive Eigenschaften aufweist, ist, und
wobei die elektrochemische Zelle kein Nickel-Metallhydrid-Akkumulator, dessen negative Elektrode mit einem kohlenstoffbasierten Speichermaterial modifiziert ist, so dass sie pseudokapazitive Eigenschaften aufweist, ist, und
wobei die elektrochemische Zelle kein asymmetrisches System mit einer negativen Elektrode auf Kohlenstoffbasis und einer positiven Elektrode auf Basis von Nickelhydroxid und/oder Nickeloxyhydroxid, ist,
**dadurch gekennzeichnet, dass** der wässrige Elektrolyt ein Arylethoxylat der allgemeinen Formel 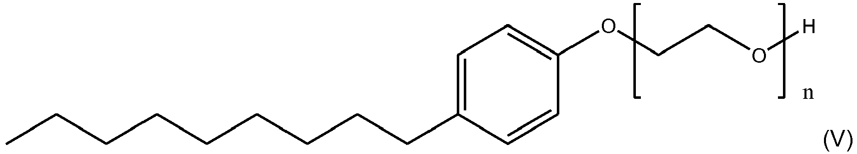
aufweist mit einem n von 10 bis 15 und
wobei das Arylethoxylat in einem Anteil von 0,0001 Gew.-% bis 2 Gew.-% in dem Elektrolyten enthalten ist.

2. Elektrochemische Zelle nach Anspruch 1, **dadurch gekennzeichnet, dass** n in Formel V 10, 11 oder 12 ist.

3. Elektrochemische Zelle nach einem der vorhergehenden Ansprüche, **dadurch gekennzeichnet, dass** das Arylethoxylat eine Molmasse im Bereich von 440 g/mol bis 900 g/mol aufweist.

4. Elektrochemische Zelle nach einem der vorhergehenden Ansprüche, **dadurch gekennzeichnet, dass** der Elektrolyt das Arylethoxylat in einem Anteil von 0,001 Gew.-% bis 1 Gew.-% enthält.

5. Elektrochemische Zelle nach einem der vorhergehenden Ansprüche, **dadurch gekennzeichnet, dass** der Elektrolyt mindestens eine Hydroxidverbindung enthält, bevorzugt in einer Konzentration von 0,1 M bis 10 M.

6. Elektrochemische Zelle nach einem der vorhergehenden Ansprüche, **dadurch gekennzeichnet, dass** der Elektrolyt
• mindestens eine Sulfatverbindung, insbesondere ein Alkali- oder Erdalkalisulfat, bevorzugt in einer Konzentration im Bereich von 0,001 Gew.-% bis 0,1 Gew.-%,
und/oder
• ein sekundäres Leitsalz aus PO₄³⁻, NO₃⁻ oder Cl⁻ Anionen und metallischen Gegenionen
und/oder
• mindestens ein Additiv aus der Gruppe mit Verdickern, Korrosionsinhibitoren, Netzmitteln und Frostschutzmitteln
enthält.

7. Elektrochemische Zelle nach einem der vorhergehenden Ansprüche, **dadurch gekennzeichnet, dass** sie wiederaufladbar ist.

8. Elektrochemische Zelle nach einem der vorhergehenden Ansprüche, **dadurch gekennzeichnet, dass** sie eine Zink/Luft-Zelle, eine Silberoxid/Zink-Zelle, eine Zink/Braunstein-Zelle, eine Quecksilberoxid/Zink-Zelle, ein Nickel/Eisen-Akkumulator, ein Nickel/Metallhydrid-Akkumulator, ein Nickel/Zink-Akkumulator, ein Nickel/Cadmium-Akkumulator, oder ein asymmetrisches System mit einer negativen Elektrode auf Kohlenstoffbasis und einer positiven Elektrode auf Basis von Mangan-Oxid (MnOₓ), ist.

## Claims

1. Electrochemical cell comprising
• a positive electrode,
• a negative electrode,
• a separator which is arranged between the electrodes,
• an aqueous electrolyte with which the electrodes are impregnated and
• a housing which is closed in a liquid-tight manner and in which the electrodes, the separator and the electrolyte are arranged,
where the electrochemical cell is not a rechargeable nickel-iron battery whose negative electrode is modified with a carbon-based storage material so that it has pseudocapacitive properties and
where the electrochemical cell is not a rechargeable nickel-metal hydride battery whose negative electrode is modified with a carbon-based storage material so that it has pseudocapacitive properties and
where the electrochemical cell is not an asymmetric system having a negative electrode based on carbon and a positive electrode based on nickel hydroxide and/or nickel oxyhydroxide, **characterized in that** the aqueous electrolyte comprises an aryl ethoxylate of the general formula 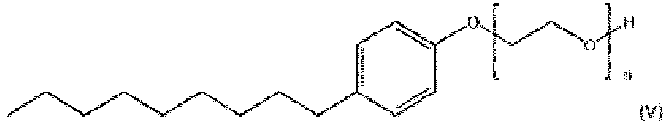
where n is from 10 to 15 and
the aryl ethoxylate is present in a proportion of from 0.0001% by weight to 2% by weight in the electrolyte.

2. Electrochemical cell according to Claim 1, **characterized in that** n in the formula V is 10, 11 or 12.

3. Electrochemical cell according to either of the preceding claims, **characterized in that** the aryl ethoxylate has a molar mass in the range from 440 g/mol to 900 g/mol.

4. Electrochemical cell according to any of the preceding claims, **characterized in that** the electrolyte contains the aryl ethoxylate in a proportion of from 0.0001% by weight to 1% by weight.

5. Electrochemical cell according to any of the preceding claims, **characterized in that** the electrolyte contains at least one hydroxide compound, preferably in a concentration of from 0.1 M to 10 M.

6. Electrochemical cell according to any of the preceding claims, **characterized in that** the electrolyte contains
• at least one sulphate compound, in particular an alkali metal sulphate or alkaline earth metal sulphate, preferably in a concentration in the range from 0.001% by weight to 0.1% by weight, and/or
• a secondary electrolyte salt composed of PO₄³⁻, NO₃⁻ or Cl⁻ anions and metallic counterions and/or
• at least one additive selected from the group consisting of thickeners, corrosion inhibitors, wetting agents and antifreezes.

7. Electrochemical cell according to any of the preceding claims, **characterized in that** it is rechargeable.

8. Electrochemical cell according to any of the preceding claims, **characterized in that** it is a zinc/air cell, a silver oxide/zinc cell, a zinc/manganese oxide cell, a mercury oxide/zinc cell, a rechargeable nickel/iron battery, a rechargeable nickel/metal hydride battery, a rechargeable nickel/zinc battery, a rechargeable nickel/cadmium battery or an asymmetric system having a negative electrode based on carbon and a positive electrode based on manganese oxide (MnOₓ).

## Revendications

1. Cellule électrochimique comportant
• une électrode positive,
• une électrode négative,
• un séparateur, qui est disposé entre les électrodes,
• un électrolyte aqueux, avec lequel les électrodes sont imprégnées et
• un boîtier fermé étanche aux liquides, dans lequel les électrodes, le séparateur et l'électrolyte sont disposés,
la cellule électrochimique n'étant pas un accumulateur nickel-fer, dont l'électrode négative est modifiée par un matériau de stockage à base de carbone, de sorte qu'elle présente des caractéristiques pseudocapacitives, et
la cellule électrochimique n'étant pas un accumulateur nickel-hydrure métallique, dont l'électrode négative est modifiée par un matériau de stockage à base de carbone, de sorte qu'elle présente des caractéristiques pseudocapacitives, et
la cellule électrochimique n'étant pas un système asymétrique doté d'une électrode négative à base de carbone et d'une électrode positive à base d'hydroxyde nickel et/ou d'oxyhydroxyde de nickel, **caractérisée en ce que** l'électrolyte aqueux présente un aryléthoxylate de formule générale 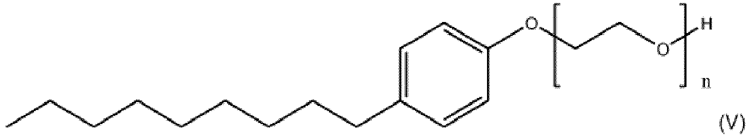
comportant un n de 10 à 15 et
l'aryléthoxylate étant contenu en une proportion de 0,0001 % en poids à 2 % en poids dans l'électrolyte.

2. Cellule électrochimique selon la revendication 1, **caractérisée en ce que** n dans la formule V est 10, 11 ou 12.

3. Cellule électrochimique selon l'une quelconque des revendications précédentes, **caractérisée en ce que** l'aryléthoxylate présente une masse molaire dans la plage de 440 g/mole à 900 g/mole.

4. Cellule électrochimique selon l'une quelconque des revendications précédentes, **caractérisée en ce que** l'électrolyte contient l'aryléthoxylate en une proportion de 0,001 % en poids à 1 % en poids.

5. Cellule électrochimique selon l'une quelconque des revendications précédentes, **caractérisée en ce que** l'électrolyte contient au moins un composé d'hydroxyde, préférablement en une concentration de 0,1 M à 10 M.

6. Cellule électrochimique selon l'une quelconque des revendications précédentes, **caractérisée en ce que** l'électrolyte contient
• au moins un composé de sulfate, en particulier un sulfate alcalin ou alcalinoterreux, préférablement en une concentration dans la plage de 0,001 % en poids à 0,1 % en poids,
et/ou
• un sel conducteur secondaire composé d'anions PO₄³⁻, NO₃⁻ ou Cl⁻ et de contre-ions métalliques
et/ou
• au moins un additif du groupe composé par des épaississants, des inhibiteurs de corrosion, des agents mouillants et des antigels.

7. Cellule électrochimique selon l'une quelconque des revendications précédentes, **caractérisée en ce qu'**elle est rechargeable.

8. Cellule électrochimique selon l'une quelconque des revendications précédentes, **caractérisée en ce qu'**elle est une cellule zinc/air, une cellule oxyde d'argent/zinc, une cellule zinc/dioxyde de manganèse, une cellule oxyde de mercure/zinc, un accumulateur nickel/fer, un accumulateur nickel/hydrure métallique, un accumulateur nickel/zinc, un accumulateur nickel/cadmium, ou un système asymétrique doté d'une électrode négative à base de carbone et d'une électrode positive à base d'oxyde de manganèse (MnOₓ).
